Europäisches Patentamt

European Patent Office

Office européen des brevets

(19)

(11) Publication number: **0 092 592**
**A1**

(12) **EUROPEAN PATENT APPLICATION**

(21) Application number: **82103408.9**

(22) Date of filing: **22.04.82**

(51) Int. Cl.³: **B 41 M 1/30**
**D 21 H 1/40, B 43 L 1/08**
**B 32 B 27/10, B 41 M 5/00**
**B 44 D 3/18**

(43) Date of publication of application:
**02.11.83 Bulletin 83/44**

(84) Designated Contracting States:
**AT BE CH DE FR GB IT LI LU NL SE**

(71) Applicant: **Planhorse International Ltd.**
**Corner Allens Road Zelanian Drive**
**East Tamaki Auckland(NZ)**

(72) Inventor: **Spicer, Victor Revell**
**14 Belmont Terrace**
**Remuera Auckland(NZ)**

(74) Representative: **Jack, Bruce James et al,**
**FORRESTER & BOEHMERT Widenmayerstrasse 4/1**
**D-8000 Munchen 22(DE)**

(54) **Reusable writing material.**

(57) Writing material is arranged to accept both erasable and non-erasable writing inks, and is suitable for use in flip charts. It typically comprises polypropylene laminated onto paper, with an opaque material on the back of the paper.

EP 0 092 592 A1

" Reusable writing material"

In teaching a class and in delivering a lecture, it is common to want to show to the audience some writing or a diagram. The oldest method of doing this is probably to write with chalk on a blackboard. If the normal practice is followed, the writing will be done in the presence of the audience. However, this is a slow process, and one not favourably regarded by anyone who is not adept in writing or drawing on a blackboard.

A partial solution to this difficulty is to prepare the material in advance, but this has two objections. The first is that the number of blackboards that can be accommodated is limited, and the second is that one still has to write on the blackboard, which is a very much more difficult operation  than writing on paper.

There are circumstances in which completely permanent records can be used. For instance, posters can be prepared by painting a skeleton on a blackboard leaving only names to be added. This has the marked advantage that, for repetitive work, only part of the message need be written on each occasion. If there are many possible messages to be conveyed, as for instance in teaching, the number of painted messages must be severely limited since the number of blackboards that can be stored is limited.

A modern variant of the blackboard is the whiteboard. This is a sheet normally of a white plastics, on which it is possible to write with a felt pen. It is probably easier to use than a blackboard, presents fewer difficulties to those not adept in legible writing and drawing, and does not produce quantities of chalk dust. If a suitable choice is made of the board and the pen, messages can be erased readily by wiping with a cloth. Permanent messages can be put onto a whiteboard, if the material of the board is suitable, by the use of a selected type of writing instrument. However, the main objection to a blackboard still holds - only a very few whiteboards can be stored.

When many messages are to be exhibited in rapid succession, a totally different device, the flip chart, is used. In its simplest form, this consists of a considerable number of sheets of paper, fixed together along one edge to a stiff backing board and mounted on a bar or a board so that the joined edges are at the top and supported, by hanging or otherwise, in the presence of the audience. Each of the sheets of paper has a message on the surface that faces the audience. When one sheet is finished with and the next is wanted, the first sheet is passed over the top of the flip chart and is made the back sheet so that a second sheet is exposed to view. This device is now very commonly used. A considerable number of sheets can be mounted to form one flip chart so that a variety of aspects of the subject can be demonstrated in rapid succession. It is even possible to add to a diagram during the lesson or lecture, but once this has been done it is almost impossible to restore the diagram to its original state; an eraser does not readily remove anything written on the chart, especially as the writing or drawing covers a very considerable area.

It is an object of the present invention to provide a reusable flip chart that will avoid the difficulties that have heretofore been encountered or that will at least allow the public a useful choice.

Accordingly in a first aspect the present invention broadly consists in a writing material comprising a sheet of paper, with a plastics film laminated on one surface thereof and a layer of opaque material affixed to the other surface.

In a second aspect the present invention broadly consists in a flip chart comprising a plurality of sheets as defined above connected together at their top edges and supported so that the chart as a whole can be exhibited to an audience, with the plastics coated surfaces of each sheet facing towards the audience.

In a third aspect the present invention broadly consists in a method of forming a laminated sheet, the method comprising the steps of laminating a plastics film to one surface of a paper sheet, and coating the opposite surface of the paper sheet with an opaque material.

In a fourth aspect the invention broadly consists in a flip chart including a number of sheets of thin flexible material joined together at their top edges and supported so that the chart as a whole may be exhibited to an audience and the sheet exposed to view may be passed over the top edge, thus exposing the next sheet, wherein each sheet is opaque and has a surface that is adapted to take and to hold permanently, even if the surface is wiped with a dry or wet wiper, drawings or words written, printed or drawn in a first specified writing material, and to take also drawings or words written, printed or drawn in a second specified writing material, such second writing material being completely removable by wiping with a dry or wet cloth.

The above gives a broad description of the present invention, a preferred form of which will now be described by the way of example.

In its preferred form the present invention consists in a sheet of paper with a thin film of polypropylene affixed to one surface of the paper and a mixture of white titanium dioxide printers ink, resin and aluminium powder applied to the opposite surface.

The material is prepared by passing the paper and film together through nip of a pair of heated rollers, and applying an adhesive material evenly over the paper just before it is passed through the nip so that the plastics film is securely adhered to the paper. Then, the paper is directed past an air knife into which the liquid comprising the ink, resin and aluminium powder mixture is directed, so that the mixture is applied evenly over the whole surface of the paper. Such a mixture dries quickly so that the material is then ready to be cut into sheets.

Thus, the present invention provides a sheet having a smooth, plastics surface, which can be written on. Anything written onto the plastics surface using a water-based or dry or other non-spirit-based writing material can be wiped off with a cloth, but anything written on using a spirit-based writing material can not, unless the cloth has also been impregnated with a spirit material. In this way the writing material can be used with a combination of inks for permanent and temporary markings.

Almost any plastics surface may be used, but polypropylene has the advantage over most other plastics surfaces that it has an inert, non-porous surface, and it is resistant to indentation.

The paper-polypropylene laminate has the advantage over an ordinary sheet of polypropylene in that it is much cheaper, lighter, and does not have the same tendency to curl that plain sheets of plastic have.

The coating of opaque material on the back of the paper ensures that markings on the sheet immediately under the topsheet will not show through the top sheet when the sheets are being used in a flip chart or the like. Any opaque material may be used, although the mixture of white titanium dioxide, printers' ink, resin and aluminium powder has advantages over most other opaque material in that it does not add a colour of its own to the sheet and it provides a very effective block against light passing through the sheet. However ordinary white printers' ink may be used, or any other ink, paint, or coating material.

The use of clear polyproplene means that the natural white colour of the paper provides a suitable background for any markings which may be placed on the sheet. However, coloured paper or coloured plastics may be used if desired to provide a coloured writing surface.

Alternatively, using a clear polypropylene, the paper sheet may have markings printed on which are required to be a permanent part of a display chart. For example, a map or other diagram or marking may be printed on the paper and remain a permanent feature of the chart.

The writing material of the present invention is particulary suitable for use in flip charts, but can be used in single charts or for any other display purpose.

In the form in which this invention is believed most usefully to be applied, a sheet which may be of stiff card or any material having corresponding physical properties is provided of a size which is approximately Al. The size however, can be chosen to suit the audience and the situation.

The backing sheet is arranged to be supported in any convenient way. If it is supported from the top, arrangements must be made so that a sheet of the same size as the backing sheet can be passed over the top of the backing sheet. Sheets of the same size, or smaller if desired, as the backing sheet are then prepared. Each of these sheets must be flexible so that it can be passed from the front to the back of the flip chart without disengaging; it must be opaque so that writing or drawing on each sheet can be read without underlying sheets providing a distraction. The surface of the sheet must be capable of taking, and retaining when wiped with a dry or wet cloth, messages that are impressed on the sheet with a first type of writing material, and of taking, but not retaining under such wiping, a message in a second writing material. The required number of sheets is taken, the messages are put on them and they are arranged in the order in which the messages are to be presented. All the sheets in their proper order are then attached to the top of the backing sheet, the flip chart is suitably supported, and felt pens or other means of applying the second writing material to a sheet are provided, as well as a cloth, either dry or damped with a suitable liquid for removing the second writing material.

It is proposed that a standard reusable flip chart would consist of a board with ten sheets of the writing surface material attached by, for example, a shaped strip of elastic material of the kind known as a file binder, the whole being retained for storage in a plastic envelope. Quite a large number of such flip charts could be stored in the space taken by, for instance, two or three blackboards.

The sheets referred to will commonly be white and it is proposed that in that case they should be known as whitesheets. They may have at least two possible forms of construction. In the first the opaque material and the water-resistant film are mixed together, preferably while wet, and are formed into a homogeneous film by any suitable known method.

Another, preferred, method of preparing the sheet is to take a sheet of paper, which may be white or coloured, and to laminate over it a layer of a clear, water-resistant plastic, such as polypropylene. Spirit-based inks can be found which are permanent on polypropylene. They will remain when the polypropylene is wiped with a damp cloth. Other inks are available, such as that sold under the name Dri-Wipe, for messages that are to be wiped off. Other water-based inks may be used.

-1o-

CLAIMS
======

1. A writing sheet comprising a sheet of paper, with a plastics film laminated on one surface thereof and a layer of opaque material affixed to the other surface.

2. A writing sheet as claimed in claim 1 wherein the plastics film is polypropylene.

3. A writing sheet as claimed in claim 1 or 2 wherein the plastics film has been heat laminated onto the paper.

4. A writing sheet as claimed in claim 1,2 or 3 wherein there is a thin coating of adhesive between the plastics and paper layers.

5. A writing sheet as claimed in any preceding claim wherein the opaque material comprises white printers' ink.

6. A writing sheet as claimed in claim 5 wherein the ink is a titanium dioxide ink.

7. A writing sheet as claimed in claim 5 or 6 wherein the ink is mixed with a resin containing a silver-coloured powder.

8. A writing sheet as claimed in claim 7 wherein the powder is aluminium.

9. A flip chart comprising a plurality of writing sheets as claimed in any preceding claim, connected together at their top edges and supported so that the chart as a whole can be exhibited to an audience, with the plastics coated surfaces of each sheet facing towards the audience.

1o. A flip chart including a number of sheets of thin flexible material joined together at their top edges and supported so that the chart as a whole may be exhibited to an audience and the sheet exposed to view may be passed over the top edge, thus exposing the next sheet, wherein each sheet is opaque and has a surface that is adapted to take and to hold permanently, even if the surface is wiped with a dry or wet wiper, drawings or words written, printed or drawn in a first specified writing material, and to take also drawings or words written, printed or drawn in a second specified writing material, such second writing material being completely removable by wiping with a dry or wet cloth.

11. A chart as claimed in claim 1o wherein the first writing material is a spirit-based writing material.

12. A chart as claimed in claim 1o or 11 wherein the second writing material is Dri-Wipe writing material.

13. A chart as claimed in claim 1o or 11 wherein the second writing material is a water-based writing material.

14. A chart as claimed in any one of claims 9 to 13 wherein each sheet includes paper laminated with a clear water- -resistant film.

15. A chart as claimed in claim 14, wherein the water- -resistant film is polypropylene.

16. A method of forming a laminated sheet, the method comprising the steps of laminating a plastics film to one surface of a paper sheet, and coating the opposite surface of the paper with an opaque material.

17. A method as claimed in claim 16 wherein the step of laminating the plastics and paper comprises passing a sheet of each between a pair of heated rollers, and inserting an adhesive material between the sheets before they are pressed together.

18. A method as claimed in claim 16 or 17 wherein the step of applying the opaque material comprises directing the opaque material in liquid form into the path of an air knife
directed at the paper sheet.

19. A method as claimed in claim 16 or 17 wherein the step
of applying the opaque material comprises spraying it on.

2o. A method as claimed in claim 16 or 17 wherein the step
of applying the opaque material comprises printing it on
via a screen roller.

European Patent Office

**EUROPEAN SEARCH REPORT**

Application number

EP 82 10 3408

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| A | US-A-3 380 871 (J.Y.THOMAS) <br><br> *Claims 1,3; column 2, lines 4-35; column 3, line 11 - column 4, line 24; figure 3* | 1,2,4, 5,11, 15,19, 20 | B 41 M 1/30 <br> D 21 H 1/40 <br> B 43 L 1/08 <br> B 32 B 27/10 <br> B 41 M 5/00 <br> B 44 D 3/18 |
| A | FR-A-2 202 521 (PAPETERIE DE MOULIN-VIEUX) <br> *Claim 1; page 1, line 18 - page 3, line 6; page 5, lines 6-37; figures 1,3,4* | 1,2,4, 5 | |
| A | FR-A-1 593 299 (J.ZYSMAN) <br> *Abstract 1-4; page 1, line 25 - page 2, line 56; example 2* | 2,5-8 | |
| A | AU-A- 12 980 (INTERNATIONAL PAPER) <br> *Claims 1,3-6; pages 3,7; example 1* | 3,14, 16,17 | TECHNICAL FIELDS SEARCHED (Int. Cl. 3) <br><br> B 41 M <br> D 21 H <br> B 43 L <br> B 32 B <br> B 44 D <br> B 05 D |
| A | BE-A- 886 552 (M.T.VAN KERK) <br><br> *Claims 1,3,6,7,9; page 4, lines 10-23; examples 1,2* | | |

The present search report has been drawn up for all claims

| Place of search THE HAGUE | Date of completion of the search 15-12-1982 | Examiner BLASBAND I. |
|---|---|---|